# EUROPÄISCHE PATENTANMELDUNG

(11) **EP 1 090 879 A2**
(43) Veröffentlichungstag der Anmeldung: **11.04.2001**
(21) Anmeldenummer: 00121555.7
(22) Anmeldetag: 30.09.2000
(51) Int. Cl.: C01B 5/02

(54) **Verfahren zur Abtrennung von H2 18 O aus einem organischen Lösungsmittel**

(30) Priorität: 07.10.1999 DE 19948427
(71) Anmelder: FORSCHUNGSZENTRUM JÜLICH GMBH, 52425 Jülich (DE)
(72) Erfinder: Hamacher, Kurt, Dr., 52076 Aachen (DE); Gail, René, Dr., 51145 Köln (DE)

(57) **Zusammenfassung**

Die Erfindung betrifft ein Verfahren zur Abtrennung von H₂¹⁸O aus einem organischen Lösungsmittel.

Das sehr teure H₂¹⁸O wird als Reagens für die Radionuklidchemie benötigt. Es besteht daher ein außerordentliches Interesse, diese Substanz aus Lösungen wiederzugewinnen. Im Verlauf der Synthese von ¹⁸F-markierten Radiotracern fällt H₂¹⁸O häufig vermischt mit Acetonitril an. Erfindungsgemäß wird H₂¹⁸O aus organischen Lösungsmitteln entfernt, indem es mit einem Trockenmittel in Kontakt gebracht wird, welches in seinem molekularen Aufbau keinen Sauerstoff, der durch Isotopenaustausch zur Verminderung des Anreicherungsgrades führt, enthält.

## Beschreibung

Die Erfindung betrifft ein Verfahren zur Abtrennung von H₂¹⁸O aus einem organischen Lösungsmittel.

Im Verlauf der Produktion von Radiotracern - speziell von trägerarm ¹⁸F-markierten Verbindungen - ist der Einsatz von hochangereichertem O-18 Wasser zur Produktion von [¹⁸F]Fluorid von großer Bedeutung. Da der Preis des angereicherten Wassers derzeit etwa 250,-- DM pro Gramm beträgt, kommt auch der Rückgewinnung von O-18 Wasser, das - prozeßbedingt - mit organischen Lösungsmitteln, speziell Acetonitril, verdünnt ist, besondere Bedeutung zu.

Bei der Synthese von den ¹⁸F-Verbindungen kommt meist Acetonitril als Lösungsmittel in Frage. Insbesondere eine Abtrennung des H₂¹⁸O aus Acetonitril ist besonders problematisch, da das H₂¹⁸O mit Acetonitril ein azeotropes Gemisch bildet, so daß eine unmittelbare Abtrennung des organischen Lösungsmittels ohne weiteres nicht möglich ist.

Es ist Aufgabe der Erfindung, ein Verfahren zur Verfügung zu stellen, das eine Separation von ¹⁸O Wasser und organischen Lösungsmitteln erlaubt und somit das wertvolle Targetmaterial für die Nuklidproduktion von [¹⁸F]Fluorid erneut bereitstellt.
Insbesondere soll dabei die Problematik von azeotropen Gemischen gemieden werden.

Ausgehend vom Oberbegriff des Anspruchs 1 wird die Aufgabe erfindungsgemäß gelöst mit den im kennzeichnenden Teil des Anspruchs 1 angegebenen Merkmalen.

Mit dem erfindungsgemäßen Verfahren ist es möglich, H₂¹⁸O auf einfache Art und Weise mit einer unveränderten ¹⁸O Anreicherung im H₂¹⁸O wiederzugewinnen welches zum Beispiel bei der Produktion von trägerarmem ¹⁸F verwendet werden kann.

Vorteilhafte Weiterbildungen der Erfindung sind in den Unteransprüchen angegeben. Im folgenden soll das erfindungsgemäße Verfahren erläutert werden.

Nach dem erfindungsgemäßen Verfahren wird eine organische Lösung, die H₂¹⁸O enthält, mit einem Hydratbildenden Salz oder einem wasserbindenden Stoff als Trockenmittel versetzt. Erfindungsgemäß enthält die Summenformel des Trockenmittels keine Sauerstoffatome, welche einen chemischen Austausch des ¹⁸O im H₂¹⁸O durch die Sauerstoffatome im Trockenmittel ermöglicht oder die Sauerstoffatome sind im Trockenmittel so fest gebunden, daß ein Austausch von ¹⁸O des H₂¹⁸O durch normalen Sauerstoff (¹⁶O) nicht stattfinden kann, das heißt, es findet keine Verminderung des Isotopenanreicherungsgrades im H₂¹⁸O statt. Beispielhaft können als Hydrat-bildende Trockenmittel CaCl₂, ZnCl₂, und als Wasserbindende Trockenmittel Zeolithe oder Molekularsiebe genannt werden. Vorzugsweise enthält das hydratbildende Trockenmittel seinerseits keine an das Zentralatom koordinierten Wassermoleküle als Hydrat und hat nicht die Eigenschaft, mit dem organischen Lösungsmittel stabile Koordinationsverbindungen zu bilden. Jedenfalls ist ein Austausch von ¹⁸O gegen ¹⁶O im Laufe des Verfahrens keinesfalls signifikant. Beim in Kontakt bringen des H₂¹⁸O mit dem Trockenmittel, kann eine Wärmetönung der Lösung stattfinden, welche zu einer Temperaturerhöhung führt. Dabei kann das durch den Trockenvorgang hydratisierte Trockenmittel entweder weiterhin als Feststoff, oder aber auch als Schmelze in der organischen Phase vorliegen.
In einem weiteren Schritt wird die flüssige Phase abgetrennt. Dies kann beispielsweise durch Dekantieren oder Filtrieren geschehen.
Als nächster Schritt kann das verbleibende hydratisierte Salz als Feststoff oder Schmelze, das noch geringe Mengen an organischem Lösungsmittel enthalten kann, nach konventionellen Methoden durch Destillation vom restlichen organischen Lösungsmittel befreit werden. Die Destillation kann beispielsweise in einem Rotationsverdampfer bei Temperaturen zwischen 20 °C und 80 °C unter vermindertem Druck durchgeführt werden.
Nachdem in den ersten Schritten die feste Phase vom organischen Lösungsmittel abgetrennt wurde, kann nunmehr die Gewinnung des H₂¹⁸O erzielt werden, indem das Hydrat in einer Destillationsvorrichtung so hoch erhitzt wird, daß eine vollständige Freisetzung des gebundenen H₂¹⁸O mit nachfolgender Kondensation stattfindet. Die Temperaturen können dabei beispielsweise zwischen 150 °C und 250 °C betragen. Eine praktikable Temperatur liegt bei 200°C bis 230 °C.

Nach diesem Prozedere betragen die im H₂¹⁸O verbleibenden Mengen an organischen Lösungsmitteln < 1 mg/ml H₂¹⁸O. Um auch noch diesen Rest zu entfernen, kann das H₂¹⁸O anschließend einer Photooxidation im UV-Bereich, das heißt vorzugsweise bei 180 nm und bei 254 nm unterworfen werden, wie sie in dem deutschen Gebrauchsmuster mit der Nummer 295 04 388.1 beschrieben ist. In einem weiteren Schritt kann das ¹⁸O-angereicherte Wasser z.B. in einer speziellen Vorrichtung, die im deutschen Gebrauchsmuster mit der Nr. 295 04 390.3 offenbart ist, zur Verdampfung und Kondensation kleiner Flüssigkeitsmengen destillativ gereinigt werden.

Der Gesamtprozeß erlaubt die Rückgewinnung von über 90 % des in der organischen Phase ursprünglich enthaltenen H₂¹⁸O in chemisch hochreiner Form und in praktisch unverändertem Anreicherungsgrad. Das erfindungsgemäße verfahren ist insbesondere bei der Trennung von H₂¹⁸O von Acetophenon, Benzol oder Ethanol von Vorteil, da diese Lösungsmittel mit Wasser ein azeotropes Gemisch bilden. Jedoch ist die Anwendung nicht auf diese Lösungsmittel beschränkt.

### Ausführungsbeispiel

Acetonitril-haltiges Wasser wird entsprechend seinem Gehalt an ¹⁸O Wasser mit wasserfreiem Calciumchlorid versetzt, so daß die zugesetzte Stoffmenge an CaCl₂ ausreicht, das Wasser (formal) als Dihydrat zu binden. Die spezifisch leichtere Acetonitril-Phase wird von der bei Temperaturen > 30° C flüssigen Hydratschmelze abgetrennt.
Acetonitril, das durch Phasenseparation nicht abgetrennt wird und in der Hydratschmelze gelöst vorliegt, wird in einer nachfolgenden Destillation bei einer Badtemperatur von etwa 50° C und einem Druck von etwa 15 mbar entfernt. (Die Destillationsparameter sind in einem weiten Bereich variabel. Voraussetzung ist lediglich, daß eine signifikante thermische Dehydratisierung der CaCl₂-¹⁸O-Hydrate unter den gegebenen Bedingungen nicht stattfindet).
Das ¹⁸O Hydrat des CaCl₂ wird bei einer Temperatur von > 200° C dehydratisiert und das freigesetzte O-18 Wasser kondensiert.
Um restliche Mengen an Acetonitril < 1 mg/ml H₂¹⁸O) zu entfernen, wird das Wasser anschließend mit der Vorrichtung des deutschen Gebrauchsmusters Nr. 295 04 388.1 einer Photooxidation und nachfolgend einer Destillation mit der Vorrichtung des deutschen Gebrauchsmusters Nr. 295 04 390.3 zur Verdampfung und Kondensation kleiner Flüssigkeitsmengen unterworfen.

## Patentansprüche

1. Verfahren zur Abtrennung von H₂¹⁸O aus einem organischen Lösungsmittel,
dadurch gekennzeichnet,
daß das H₂¹⁸O enthaltende Lösungsmittel mit einem Trockenmittel in Kontakt gebracht wird, welches in seiner Summenformel keinen Sauerstoff enthält oder dessen Sauerstoffatome so fest gebunden sind, daß ein Austausch von ¹⁸O durch ¹⁶O im Verlauf des Verfahrens nicht signifikant ist.

2. Verfahren nach Anspruch 1,
dadurch gekennzeichnet,
daß das Trockenmittel CaCl₂ ist.

3. Verfahren nach Anspruch 1,
dadurch gekennzeichnet,
daß das Trockenmittel ein Zeolith oder ein Molekularsieb ist.

4. Verfahren nach einem der Ansprüche 1 bis 3,
dadurch gekennzeichnet,
daß das organische Lösungsmittel Acetonitril ist.

5. Verfahren nach einem der Ansprüche 1 bis 4,
dadurch gekennzeichnet,
daß das organische Lösungsmittel, nachdem es mit dem Trockenmittel in Kontakt gebracht wurde, vom Trockenmittel abgetrennt wird.

6. Verfahren nach Anspruch 5
dadurch gekennzeichnet,
daß das organische Lösungsmittel durch Filtration oder Dekantieren entfernt wird.

7. Verfahren nach Anspruch 5 oder 6,
dadurch gekennzeichnet,
daß das nach der Abtrennung des organischen Lösungsmittels verbleibende H₂¹⁸O-hydratisierte Trockenmittel, das noch geringe Mengen an organischem Lösungsmittel enthalten kann, einer Destillation zugeführt wird.

8. Verfahren nach Anspruch 7,
dadurch gekennzeichnet,
daß die Destillation bei einer Temperatur vorgenommen wird, die keine signifikante Dehydratisierung des Hydrats zur Folge hat.

9. Verfahren nach Anspruch 8,
dadurch gekennzeichnet,
daß die Destillation bei einer Temperatur zwischen 20 °C und 80 °C vorgenommen wird.

10. Verfahren nach Anspruch 7,8 oder 9,
dadurch gekennzeichnet,
daß die Destillation unter Vakuum durchgeführt wird.

11. Verfahren nach einem der Ansprüche 1 bis 8,
dadurch gekennzeichnet,
daß H₂¹⁸O aus dem Trockenmittel durch Erhitzen entfernt wird.

12. Verfahren nach Anspruch 11,
dadurch gekennzeichnet,
daß auf eine Temperatur von 200 °C bis 230 °C erhitzt wird.

13. Verfahren nach einem der Ansprüche 1 bis 12,
dadurch gekennzeichnet,
daß das so gewonnene H₂¹⁸O einer Photooxidation mit UV-Licht unterworfen wird.
